# FASCICULE DE BREVET EUROPEEN

(11) **EP 3 669 692 B1**
(45) Date de publication et mention de la délivrance du brevet: **08.02.2023**
(21) Numéro de dépôt: 19215908.5
(22) Date de dépôt: 13.12.2019
(51) Int. Cl.: A44C 5/10, A44C 5/14, A44C 27/00, B22F 3/00, B33Y 80/00

(54) **ENSEMBLE DE MAILLONS ET BRACELET À MAILLONS INTÉGRANT CET ENSEMBLE**
KETTENGLIEDERANORDNUNG UND GLIEDERARMBAND, DAS EINE SOLCHE ANORDNUNG EINSCHLIESST
SET OF LINKS AND BRACELET WITH LINKS INCLUDING SAID SET

(30) Priorité: 21.12.2018 CH 15952018
(43) Date de publication de la demande: 24.06.2020
(73) Titulaire: Richemont International S.A., 1752 Villars-sur-Glâne (CH)
(72) Inventeur: CRETIN, Francis, 39220 Bois-d'Amont (FR)
(74) Mandataire: e-Patent SA

(56) Documents cités:
- EP-A1- 3 403 522
- US-A1- 2014 305 093
- Luke: "3D Printed Watch Strap", , 1 avril 2016 (2016-04-01), pages 1-2, XP055577324, https://web.archive.org/web/20140622210222 /http://luke-a-cooke.co.uk/Projects.html Extrait de l'Internet: URL:http://www.luke-a-cooke.co.uk/index.ht ml [extrait le 2019-04-03]

## Description

### Domaine technique

La présente invention se rapporte au domaine de l'horlogerie et de la bijouterie. Elle concerne, plus particulièrement, un ensemble de maillons destinés à former un bracelet ou une chaîne de maillons, et un bracelet à maillons intégrant cet ensemble.

### Etat de la technique

Les bracelets à maillons sont très utilisés notamment dans le domaine de l'horlogerie. On connaît également des assemblages de type à maillons dans le domaine de la bijouterie, pour des bracelets, des chainettes ou des colliers. L'un des inconvénients de ces assemblages réside dans le réglage de la longueur. Particulièrement pour un bracelet, la longueur du bracelet dépend de la dimension du poignet du porteur. En effet, la longueur d'un maillon influe directement sur la précision du réglage, qui ne peut être que d'environ un demi-maillon. La mise en longueur peut également s'avérer délicate, puisqu'il faut retirer les goupilles qui, généralement, relient les maillons les uns aux autres, sans endommager les surfaces des maillons restant.

On a cherché des moyens permettant de retirer et d'ajouter des maillons sans devoir recourir à des outils, mais sans toutefois améliorer la résolution possible du réglage.

Plus récemment, le document WO2018121977A1 propose d'utiliser des techniques de fabrication additive pour fabriquer des bracelets à maillons. Cela peut permettre, par exemple, d'ajuster la longueur des maillons pour fabriquer un bracelet sur mesure. Les maillons sont réalisés avec une cavité dans laquelle peut prendre place un élément d'articulation, de type barrette conventionnelle. Cependant, dans le document, la construction proposée reste limitée en termes de géométrie de bracelet et de matériaux. On sait en effet que la question du support pour le matériau imprimé est souvent limitante pour les formes conçues. Dans WO2018121977A1, on utilise la technologie Multi-Jet Modeling qui permet d'injecter un matériau de support amovible de type gel pour combler les espaces/cavités ne recevant pas de matière photopolymere. Le bracelet ne peut dont être réalisé qu'en polymère, et le process de fabrication nécessite de prévoir des étapes de lavage du gel.

La page internet https://web.archive.org/web/20140622210222/http://luke-a-cooke.co.uk/Projects.html décrit succinctement un projet de réalisation d'un bracelet de montre en plastique, par fabrication additive, permettant d'éviter tout assemblage entre les différents maillons composant le bracelet.

La présente invention a pour but de proposer un nouveau type d'assemblage de maillons permettant de réaliser de nouvelles géométries de bracelets, et de simplifier les opérations de montage, en profitant des avantages offerts par les techniques de fabrication additive.

### Divulgation de l'invention

De façon plus précise, l'invention concerne un ensemble de maillons tels que définis dans les revendications. L'invention concerne également un bracelet à maillons comprenant un ensemble de maillons selon l'invention, et un procédé de fabrication d'un tel ensemble de maillons.

### Brève description des dessins

D'autres détails de l'invention apparaîtront plus clairement à la lecture de la description qui suit, faite en référence au dessin annexé dans lequel :
- les figures 1, 2 et 3 sont des vues d'un premier mode de réalisation d'éléments de maillon selon l'invention, respectivement avec les éléments assemblés montrés en coupe, avec un premier élément et un deuxième élément en perspective,

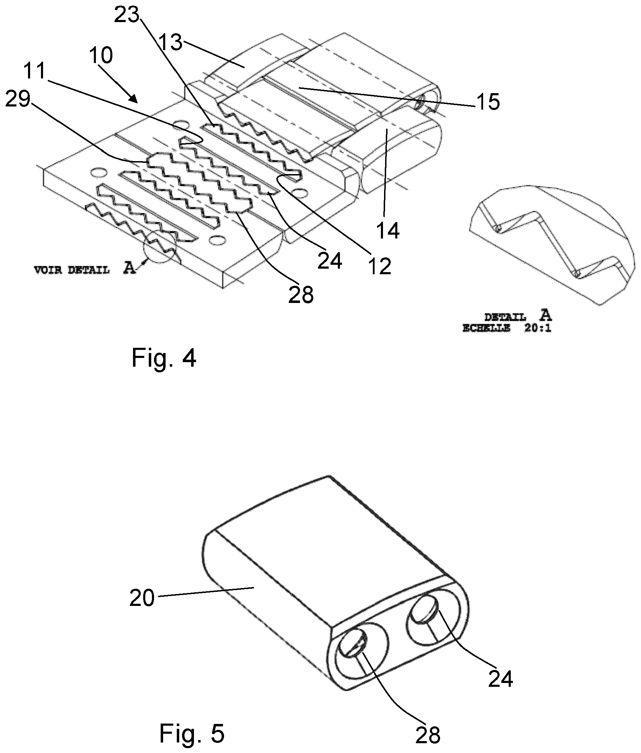

- la figure 4 montre un deuxième mode de réalisation selon l'invention, avec les éléments assemblés montrés en coupe, avec une vue agrandie d'un détail,
- la figure 5 montre un premier maillon de la figure 4, représenté en perspective,
- les figures 6 et 7 sont un deuxième maillon de la figure 4, représenté en perspective selon deux angles différents,
- la figure 8 montre une vue en coupe du deuxième mode de réalisation, avec une vue agrandie d'un détail,
- la figure 9 montre une alternative du deuxième mode de réalisation de l'invention, et
- la figure 10 est un autre exemple de réalisation.

### Mode de réalisation de l'invention

L'invention propose un assemblage de maillons original, adapté pour une réalisation par fabrication additive. De manière particulièrement intéressante, cette construction permet de se passer des habituelles barrettes formant les pivots entre les maillons. De plus, la présente invention propose des géométries et des constructions des pivotements des maillons particulièrement avantageuses permettant la réalisation d'éléments de bracelet à maillons métalliques par fabrication additive.

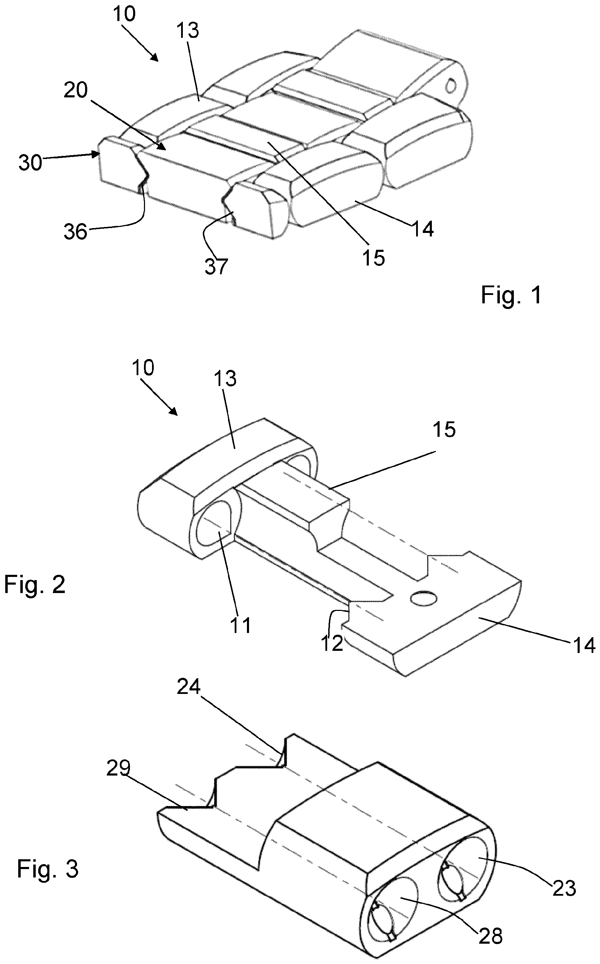

Ainsi, selon l'invention, afin d'agencer un premier maillon 10 métallique et un deuxième maillon 20 métallique, mobiles l'un en référence à l'autre selon un axe de rotation, le premier maillon 10 (Fig. 2) comporte des premières surfaces de pivotement 11 et des deuxièmes surfaces de pivotement 12, centrées sur ledit axe de rotation.

Le deuxième maillon 20 (Fig. 3) comporte également des troisièmes surfaces de pivotement 23 et des quatrièmes surfaces de pivotement 24, centrées sur ledit axe de rotation.

Les premières 11 et troisièmes 23 surfaces de pivotement forment respectivement une première paire de forme et contre-forme, destinées à coopérer pour former un premier pivot. En d'autres termes, les forme et contre-forme susceptibles de coopérer ensemble présentent des surfaces de révolution, réalisées selon un même axe. Elles sont en outre positionnées l'une par rapport à l'autre selon cet axe et avec un jeu ajusté permettant un déplacement relatif en rotation, tout en limitant les autres degrés de liberté entre la forme et la contre-forme.

Les deuxièmes 12 et quatrièmes 24 surfaces de pivotement forment respectivement une deuxième paire de forme et contre-forme, destinées à coopérer pour former un deuxième pivot. Les premier et deuxième pivots sont centrés sur l'axe de rotation.

Les maillons 10 et 12 sont réalisés et imbriqués l'un à l'autre par fabrication additive, sans autres moyens d'assemblage.

Dans les exemples avantageux représentés sur les dessins, les surfaces de pivotement sont définies par des génératrices de cônes. De préférence, pour faciliter une réalisation par fabrication additive, lesdites génératrices de cônes présentent un angle α<45°, les axes desdits cônes étant alignés avec l'axe de rotation des pivots. Dans la présente demande, un cône désigne un cône de révolution. Son axe est la droite perpendiculaire à la base du cône, et qui passe par son sommet. L'angle de la génératrice de cône correspond à la pente formée par le débord des couches de matériau superposées lors de la fabrication additive. Avec les technologies actuelles, on peut réaliser, avec une qualité de l'état de surface suffisante et sans support, une pente de de l'ordre de 45°. Les couches de matériau superposées sont donc autoportantes, avant solidification.

On notera que les formes et contre-formes peuvent avoir d'autres géométries, dans les mesures offertes par les techniques de fabrication additive. On peut envisager des forme et contre-forme sphériques, en boule pour l'un et en cavité pour l'autre. Des formes de peignes entrecroisés peuvent également être envisagées, éventuellement avec des extrémités biseautées ou en clé de voute, pour éviter des affaissements de matière lors de la fabrication. De manière générale, l'invention prévoit que chacune parmi deux unités pivotées l'une en référence à l'autre (notamment deux maillons ou un maillon et une boite) présente deux surfaces de guidage agencées pour coopérer avec deux surfaces de guidage sensiblement complémentaires ou antagonistes de l'autre unité réalisées d'une pièce avec cette dernière, l'ensemble de ces surfaces de guidage étant conformé et orienté de manière à définir un axe de rotation entre les deux unités concernées.

Selon un premier mode de réalisation illustré sur les figures 1 à 3, l'ensemble de maillons comprend un premier maillon 10 en forme de H avec deux branches latérales 13, 14 reliées par une branche centrale 15. Dans une construction traditionnelle, chaque branche du H serait formée par un maillon indépendant, assemblés aux autres par divers moyens, de type goupille notamment. Dans la présente invention, le H est réalisé en une pièce, rigide, désignée en tant que maillon. Le deuxième maillon 20 prend place entre les branches latérales 13, 14 du premier maillon 10, d'un premier côté de la branche centrale 15.

Plus particulièrement, comme on peut le voir notamment sur la figure 2, les premières surfaces de pivotement coniques 11 et les deuxièmes surfaces de pivotement coniques 12 sont agencées en saillies des faces internes des branches latérales 13, 14 du maillon, et se font face. Leur axe est aligné sur l'axe de rotation des pivots et les cônes sont disposés symétriquement par rapport à un axe longitudinal passant perpendiculairement au milieu de la branche centrale 15.

Le deuxième maillon 20 comprend les troisièmes surfaces de pivotement coniques 23, positionnées en correspondance des premières surfaces 11. En d'autres termes, les premières surfaces 11 sont ajustées en vis-à-vis des troisièmes surfaces 23, ces dernières formant un creux en retrait de la surface latérale du deuxième maillon 20. On définit ainsi une première paire de forme et contre-forme. De même, les quatrièmes surfaces 24 de pivotement sont positionnées en correspondance des deuxièmes surfaces 12, définissant une deuxième paire de forme et contre-forme.

Les surfaces de pivotement sont agencées de manière à sensiblement supprimer les degrés de liberté entre les maillons, sauf la rotation selon l'axe de rotation. On comprend qu'un certain jeu de fonctionnement est nécessaire entres les surfaces de pivotement, pour permettre un mouvement relatif entre les éléments. L'homme du métier pourra ajuster ce jeu en fonction de la précision de fabrication des éléments. Ce sont les deux paires de forme et contre-forme qui positionnent les maillons l'un par rapport à l'autre.

Ainsi, les angles définissant les cônes des premières 11 et troisièmes 23 surfaces de pivotement présentent des angles, respectivement α1 et α3, sensiblement égaux. De même, les cônes des deuxième 12 et quatrième 24 surfaces de pivotement présentent des angles, respectivement α2 et α4, sensiblement égaux. Ainsi, en généralisant pour des angles αi avec i= numéro de la surface, on a α1 = α3 et α2 = α4. De préférence, mais sans que cela soit nécessaire α1 = α2.

On comprend que, en l'absence de moyens d'assemblage entre le premier élément et le deuxième élément, il est impossible de construire un tel assemblage autrement que par fabrication additive, en faisant croître simultanément le premier 10 et le deuxième 20 maillons.

Grâce au fait que les cônes sont définis par une génératrice dont l'angle est sensiblement supérieur ou égal à 45°, on peut superposer des couches de matériau pour la réalisation de pièces par fabrication additive. Notamment, on peut ainsi déposer des poudres qui sont ensuite irradiées par laser pour former un matériau massif, métallique pouvant varier selon la nature de la poudre. En effet, le débord entre deux couches successives créé par une pente allant jusqu'à 45°, permet auxdites couches de ne pas s'effondrer ou se déformer, lors du dépôt des couches consécutives. D'autres techniques de fabrication additives peuvent également être mises en oeuvre, comme le Métal Binder Jetting. Il est également possible de réaliser des maillons en céramique.

Bien que particulièrement adaptée aux technologies actuelles de fabrication additive, notamment pour fabriquer des pièces en métaux, l'utilisation de surfaces coniques n'est pas obligatoire. Comme susmentionné, l'homme du métier pourra envisager d'autres types de forme et contre-forme, au moins partiellement de révolution, permettant de réaliser des surfaces de pivotement.

En poursuivant l'assemblage des maillons de la même manière, l'ensemble de maillons comprend au moins un troisième maillon 30, similaire au premier maillon 10, en forme de H avec deux branches latérales 33, 34. Ce troisième maillon est relié au premier maillon 10 par l'intermédiaire du deuxième maillon 20, qui prend place entre les branches latérales 33, 34 du troisième maillon 30. En jouxtant le premier 10 et le troisième 30 maillons par leurs branches latérales, ils définissent entre elles et leur branche centrale, un espace dans lequel prend place le deuxième maillon 20.

Le troisième maillon 30 comporte des cinquièmes 35 et des sixièmes 36 surfaces de pivotement coopérant respectivement avec des septièmes 27 et des huitièmes 28 surfaces de pivotement du deuxième maillon 20. Ces dernières sont respectivement disposées à côté des troisièmes 23 et quatrièmes 24 surfaces de pivotement, disposées également sur les faces latérales du deuxième maillon 20.

Les cinquièmes 35 et septièmes 27 surfaces de pivotement forment respectivement une troisième paire de forme et contre-forme destinées à coopérer pour former un troisième pivot. Les sixièmes 36 et huitièmes 28 surfaces de pivotement forment respectivement une quatrième paire de forme et contre-forme destinées à coopérer pour former un quatrième pivot, aligné avec le troisième pivot.

Dans un deuxième mode de réalisation, l'allure extérieure du bracelet est similaire à celle du premier mode de réalisation, mais les pivotements sont réalisés différemment. Au moins des premières 11 et deuxièmes 12 surfaces de pivotement sont agencées sur un bras 100 s'étendant en saillie d'un premier maillon 10, et au moins des troisièmes 23 et quatrièmes 24 surfaces de pivotement sont agencées dans une cavité 200 formée dans le deuxième maillon 20, à l'intérieure de laquelle est conformé ledit bras 100.

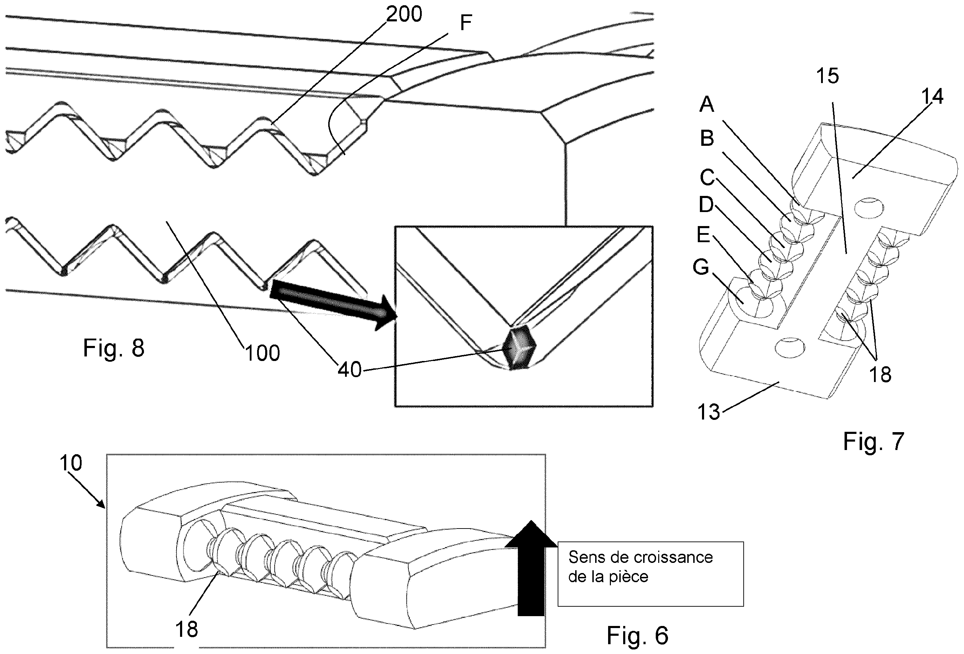

Plus particulièrement, comme représenté sur les figures 6 et 7, le premier maillon 10 est en forme de H avec deux branches latérales 13, 14 reliées par une branche centrale 15. Le bras 100 relie les deux branches latérales 13 et 14, parallèlement à la branche centrale 15, tandis que le deuxième maillon 20 prend place entre les branches latérales du premier maillon 10.

La cavité 200 formée dans le deuxième maillon 20 présente une conformation correspondante par rapport aux surfaces de pivotement que présente le bras. Les premières 11 et deuxièmes 12 surfaces de pivotement du bras 100 coopèrent avec les troisièmes 23 et quatrièmes 24 surfaces de pivotement correspondantes de la cavité 200, formant respectivement des paires de forme et contre-forme, définissant chacune un pivot.

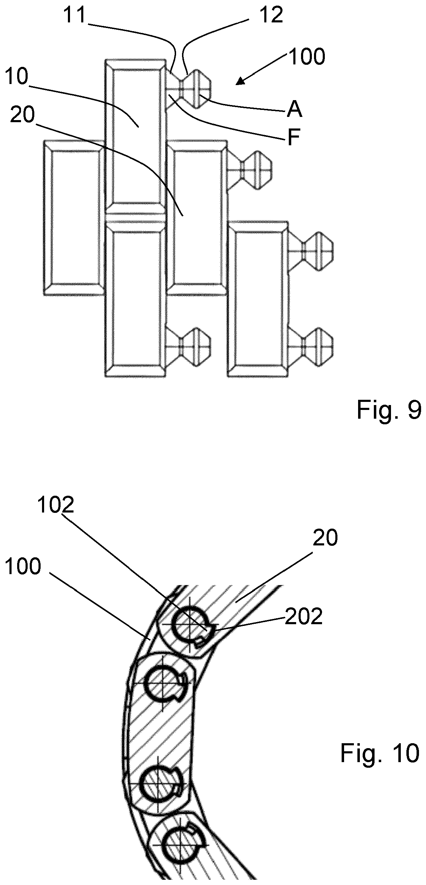

Dans l'exemple proposé, on a douze paires de formes et de contre-formes, réparties pour les formes en 5 plots A, B, C, D, E formés par deux cônes reliés par leur base, et par deux cônes F et G saillant des faces internes du premier maillon 10. Les contre-formes sont en correspondance, avec 6 pointes coopérant avec les creux définis par les cônes. Il ne s'agit évidemment que d'un exemple non limitatif et nous donnerons ci-après en référence à la figure 9, un autre exemple de réalisation.

Pour fabriquer l'ensemble formé par le premier 10 et le deuxième 20 maillons, on dépose des couches successives, selon le sens de croissance représenté par la flèche de la figure 6. Or, bien entendu, les surfaces du premier maillon 10 doivent être libres par rapport aux surfaces du deuxième maillon 20, afin de permettre leur déplacement relatif. Pour donner un support à la réalisation du bras du premier maillon 10, on fait croître ce dernier à partir d'une série de cales intermédiaires 40, disposées au fond des creux formés par les surfaces de pivotement du deuxième maillon 20. Chaque cale 40 est sacrificielle et présente une jonction avec, respectivement, le premier maillon 10 et le deuxième maillon 20, selon une zone d'affaiblissement mécanique, permettant de rompre la liaison entre les maillons, après finalisation de la fabrication, par une simple mise en rotation relative des maillons. La rupture peut se faire sur l'une ou sur les deux jonctions, les résidus des cales 40 ne gênant pas le fonctionnement ultérieur ou pouvant être éliminés par des ouvertures ménagées à cet effet dans la cavité du deuxième maillon 20.

Pour également faciliter la superposition des couches, les parties inférieures des plots A, B, C, D, E du bras, c'est-à-dire celles disposées en dessous du diamètre médian, du côté du premier maillon 10, sont tronquées. Elles sont tronquées par des plans de coupe, qui définissent des zones biseautées 18. Les plans de coupe se croisent selon une ligne parallèle à l'axe des bras, en un point situé à la périphérie du cône et formant la jonction avec la cale intermédiaire 40. L'angle aigu formé par l'intersection de ces plans est sensiblement supérieur ou égal à 45° afin de réduire les risques d'affaissement lors de la superposition des couches.

Pour la liaison avec un autre maillon, du type du deuxième maillon, le premier maillon comporte un autre bras 50, situé de l'autre côté du maillon central, et coopérant de manière similaire avec un maillon du type du deuxième maillon. Le deuxième maillon comporte également une deuxième cavité 200 pour coopérer avec un bras 50 d'un maillon voisin.

A la figure 9, on a représenté un autre exemple de réalisation. De manière similaire au deuxième mode de réalisation ci-dessus, les premières 11 et deuxièmes 12 surfaces de pivotement sont agencées sur un bras 100 s'étendant en saillie d'un premier maillon 10, et les troisièmes 23 et quatrièmes 24 surfaces de pivotement sont agencées dans une cavité 200 formée dans le deuxième maillon 20, à l'intérieure de laquelle est conformée ledit bras. En l'espèce, le bras est agencé en porte-à-faux par rapport au premier maillon 10. En d'autres termes, le bras présente une extrémité libre, non solidaire d'un autre maillon ou partie de maillon. Ainsi, le maillon présente, de manière visible lorsqu'il est assemblé, une simple forme parallélépipédique.

Dans l'exemple illustré de manière non limitative, le bras 100 comporte un plot A formé par deux cônes reliés par leur base, et par un cône F saillant de la face interne du premier maillon 10. Les contre-formes sont en correspondance.

Hormis les maillons des rangées latérales, chaque maillon comporte un bras 100 et une cavité 200, pour recevoir le bras d'un maillon voisin. Les maillons des rangées latérales sont adaptés pour ne comporter soit que le bras, soit que la cavité, et laisser apparaître une face externe libre plate et exempte de surface de pivotement.

On peut ainsi former à l'envi des ensembles de maillons, chaque élément étant individualisé, dont les faces des éléments extérieurs ne laissent apparaître aucune trace d'assemblage des maillons.

Pour la fabrication, on pourra avoir recours à des cales sacrificielles, comme décrit ci-dessus.

De manière supplémentaire, pour chacun des exemples donnés ci-dessus, les éléments extérieurs peuvent présenter des canaux d'évacuation, permettant d'éliminer les résidus de poudre issus de la fabrication additive. Ces canaux débouchent notamment avantageusement dans les cavités des deuxièmes maillons.

On peut également prévoir de moyens de limitation de la rotation entre deux maillons. Cela peut permettre d'éviter des chocs entre les maillons, notamment par pivotement jusqu'à la mise en butée et en contact entre des faces supérieures de maillons ou entre des faces inférieures de maillons.

La figure 10 donne un exemple de réalisation de moyens de limitation de la rotation. Ces moyens peuvent avantageusement être réalisés en ajoutant aux surfaces de pivotement, des éléments qui ne sont pas de révolution. L'un des maillons comporte un élément mâle, engagé dans un élément femelle de l'autre maillon. La forme de l'élément femelle permet un déplacement relatif de l'élément mâle, lors de la rotation des maillons, mais les dimensions de l'élément femelle limitent l'angle de rotation relatif entre les deux maillons.

Sur la figure 10, on voit qu'au moins une des surfaces de pivotement des bras 100 présentent un doigt 102 ou une côte, s'engageant dans une gorge 202 formée dans la paroi de la cavité 200 du deuxième maillon 20. Le doigt présente un ébat dans la gorge, dont les extrémités forment des butées pour le doigt, limitant la rotation relative entre les maillons.

La description ci-dessus a été faite en expliquant les interactions entre un premier, un deuxième, voire un troisième maillon. L'homme du métier pourra aisément le généraliser à une pluralité de maillons. Ainsi, l'invention concerne encore un bracelet à maillons intégrant un ensemble de maillons selon l'un des modes de réalisation ci-dessus. A partir de l'enseignement de la présente demande, l'homme du métier peut dupliquer les ensembles décrits pourformer un bracelet, et relier un fermoir aux extrémités du bracelet. Les maillons en extrémité du bracelet peuvent comporter une ouverture recevant une barrette ou un autre moyen de fixation à un fermoir, et également à une boite de montre. La boite de montre, au moins une partie de la boite de montre, comme la carrure, peut également être venue de fabrication additive avec le bracelet, en réalisant une articulation entre la carrure boite et le bracelet, comme décrit ci-dessus à propos de deux maillons. On considère alors la carrure ou la boite de manière similaire à un maillon de bracelet.

Il est donc aisé de réaliser un bracelet sur mesure, dont la longueur est directement ajustée à la taille du poignet du porteur, en calculant une longueur moyenne de maillons, voire en faisant varier les longueurs de maillon pour avoir des zones de galbes différents.

L'invention concerne également un procédé de fabrication d'un ensemble de maillons tel que décrit ci-dessus, dans lequel on réalise une cale support 40, intermédiaire, entre au moins certaines des formes et contre-formes. Après réalisation des maillons, on peut conserver les cales pour avoir un bracelet rigide, permettant d'effectuer plus aisément des opérations de finition, de type polissage par exemple. Les cales sont destinées à être rompues en fin de fabrication, libérant ainsi la rotation entre les maillons adjacents.

Les valeurs des angles données ci-dessus ne doivent pas être interprétées de manière stricte. Un angle de 45° permet d'obtenir un état de surface qui reste qualitatif pour avoir des bonnes conditions de coopération entre les surfaces de pivotement. En allant en-deçà, on peut encore déposer des couches, mais avec une qualité moindre. Les évolutions technologiques permettront sans doute de repousser ces limites. La notion de valeur limite de pente formée par le débord des couches de matériau superposées, sans support, permet de généraliser cette limite à toute géométrie de forme et de contre-forme, pour toute technologie de fabrication additive.

## Revendications

1. Ensemble de maillons destinés à former une portion de bracelet à maillons ou de chaine à maillons, ou un maillon et une boite de montre, lesdits éléments comprenant au moins un premier maillon (10) et un deuxième maillon (20), lesdits premier et deuxième maillons étant mobiles l'un en référence à l'autre selon un axe de rotation et étant réalisés et imbriqués l'un à l'autre par fabrication additive, sans autres moyens d'assemblage,
le premier maillon (10) comportant des premières surfaces de pivotement (11) et des deuxièmes surfaces de pivotement (12), centrées sur ledit axe de rotation,
le deuxième maillon (20) comportant des troisièmes surfaces de pivotement (23) et des quatrièmes surfaces de pivotement (24), centrées sur ledit axe de rotation, lesdites premières et troisième surfaces de pivotement formant respectivement une première paire de forme et contre-forme destinées à coopérer pour former un premier pivot et lesdites deuxièmes et quatrièmes surfaces de pivotement formant respectivement une deuxième paire de forme et contre-forme destinées à coopérer pour former un deuxième pivot, lesdits premier et deuxième pivots étant centrés sur ledit axe de rotation,
**caractérisé en ce que** lesdits premier et deuxième maillons (10, 20) sont métalliques, et
**en ce que** lesdites surfaces de pivotement sont agencées de telle manière que lesdites première et deuxième paires de forme et contre-forme suppriment sensiblement les degrés de liberté entre lesdits premier et deuxième maillons, sauf la rotation selon ledit axe de rotation.

2. Ensemble de maillons selon la revendication 1, **caractérisé en ce que** lesdites surfaces de pivotement sont définies par des génératrices de cônes, présentant un angle α sensiblement supérieur ou égal à une valeur limite de pente formée par le débord des couches de matériau superposées sans support, lors de la fabrication additive, typiquement sensiblement supérieur ou égal à 45°, et les axes desdits cônes étant situés sur ledit axe de rotation.

3. Ensemble de maillons selon la revendication 2, **caractérisé en ce que** les cônes définissant les surfaces du premier pivot font face / sont orientés de manière opposée aux cônes définissant les surfaces du deuxième pivot.

4. Ensemble de maillons selon l'une des revendications précédentes, **caractérisé en ce que** les angles définissant les cônes i, avec i= numéro de la surface, présentent un angle αi, avec α1 ≃α3 et α2 ≃α4.

5. Ensemble de maillons selon l'une des revendications précédentes, dans lequel le premier maillon (10) est en forme de H avec deux branches latérales (13, 14) reliées par une branche centrale (15), le deuxième maillon (20) prenant place entre les branches latérales du premier maillon (10), d'un premier côté de la branche centrale.

6. Ensemble de maillons selon la revendication 5, **caractérisé en ce qu'**il comprend au moins un troisième maillon (30), similaire au premier maillon (10) en forme de H avec deux branches latérales (33, 34), ledit troisième maillon étant relié au premier maillon (10) par l'intermédiaire du deuxième maillon (20), qui prend place entre les branches latérales (33, 34) du troisième maillon (30) et **en ce que** le troisième maillon comporte des cinquièmes (35) et des sixièmes (36) surfaces de pivotement coopérant respectivement avec des septièmes (27) et des huitièmes (28) surfaces de pivotement du deuxième maillon (20).

7. Ensemble de maillons selon l'une des revendications 1 à 4, **caractérisé en ce que** les premières (11) et deuxièmes (12) surfaces de pivotement sont agencées sur un bras (100) s'étendant en saillie d'un premier maillon (10), et les troisièmes (23) et quatrièmes (24) surfaces de pivotement sont agencées dans une cavité (200) formée dans le deuxième maillon (20), à l'intérieure de laquelle est conformée ledit bras.

8. Ensemble de maillons selon la revendication 7, **caractérisé en ce que** ledit premier maillon (10) est en forme de H avec deux branches latérales (13, 14) reliées par une branche centrale (15), ledit bras (100) reliant deux branches latérales, parallèlement à la branche centrale, le deuxième maillon (20) prenant place entre les branches latérales du premier maillon (10).

9. Ensemble selon la revendication 7, **caractérisé en ce que** ledit bras (100) s'étend en porte-à-faux à partir du premier maillon (10).

10. Ensemble selon l'une des revendications 7 à 9 et selon la revendication 2, **caractérisé en ce que** les surfaces de pivotement dudit bras comporte des formes réparties en au moins un plot (A, B, C, D, E) formé par deux cônes reliés par leur base, les parties inférieures dudit au moins un plot étant tronquées par des plans de coupe qui se croisent selon une ligne parallèle à l'axe des bras, en un point situé à la périphérie du cône, l'angle aigu formé par l'intersection de ces plans étant sensiblement supérieur ou égal à 45°.

11. Ensemble selon l'une des revendications précédentes, **caractérisé en ce qu'**il comprend des moyens de limitation de la rotation entre le premier et le deuxième maillons.

12. Bracelet à maillons comprenant un ensemble de maillons selon l'une des revendications précédentes.

13. Procédé de fabrication d'un ensemble selon l'une des revendications 1 à 11, **caractérisé en ce qu'**il comprend la réalisation d'une cale support intermédiaire entre au moins certaines des formes et contre-formes, ladite cale étant destinée à être rompue en fin de fabrication.

## Patentansprüche

1. Anordnung von Gliedern, die dazu bestimmt sind, einen Abschnitt eines Gliederarmbands oder einer Gliederkette oder ein Glied und ein Uhrengehäuse auszubilden, wobei die Elemente mindestens ein erstes Glied (10) und ein zweites Glied (20) umfassen, wobei das erste und das zweite Glied gegeneinander entlang einer Drehachse beweglich sind und ohne weitere Montagemittel durch additive Fertigung hergestellt und miteinander verzahnt werden,
wobei das erste Glied (10) erste Drehflächen (11) und zweite Drehflächen (12) aufweist, die auf der Drehachse zentriert sind,
wobei das zweite Glied (20) dritte Drehflächen (23) und vierte Drehflächen (24) aufweist, die auf der Drehachse zentriert sind,
wobei die ersten und dritten Drehflächen jeweils ein erstes Paar aus Form und Gegenform bilden, die dazu bestimmt sind, zur Bildung eines ersten Drehpunkts zusammenzuwirken, und wobei die zweiten und vierten Drehflächen jeweils ein zweites Paar aus Form und Gegenform bilden, die dazu bestimmt sind, zur Bildung eines zweiten Drehpunkts zusammenzuwirken, wobei der erste und der zweite Drehpunkt auf der Drehachse zentriert sind,
**dadurch gekennzeichnet, dass** das erste und das zweite Glied (10, 20) aus Metall sind und
dass die Drehflächen so angeordnet sind, dass das erste und das zweite Paar aus Form und Gegenform im Wesentlichen die Freiheitsgrade zwischen dem ersten und dem zweiten Glied mit Ausnahme der Drehung um die Drehachse unterdrücken.

2. Gliederanordnung nach Anspruch 1, **dadurch gekennzeichnet, dass** die Drehflächen durch Mantellinien von Kegeln definiert sind, die einen Winkel α aufweisen, der im Wesentlichen größer als oder so groß wie ein Grenzwert der Steigung ist, die durch den Überstand der Materialschichten gebildet wird, die während der additiven Fertigung ohne Unterstützung aufeinander aufgebracht werden, typischerweise im Wesentlichen gleich 45° oder größer, und wobei die Kegelachsen auf der Drehachse liegen.

3. Gliederanordnung nach Anspruch 2, **dadurch gekennzeichnet, dass** die Kegel, die die Flächen des ersten Drehpunkts definieren, den Kegeln, die die Flächen des zweiten Drehpunkts definieren, gegenüberliegen/entgegengesetzt dazu ausgerichtet sind.

4. Gliederanordnung nach einem der vorangehenden Ansprüche, **dadurch gekennzeichnet, dass** die Winkel, die die Kegel i definieren, mit i = Nummer der Fläche, einen Winkel αi aufweisen, wobei α1 ≃ α3 und α2 ≃ α4.

5. Gliederanordnung nach einem der vorangehenden Ansprüche, wobei das erste Glied (10) H-förmig mit zwei seitlichen Zweigen (13, 14), die durch einen mittleren Zweig (15) verbunden sind, wobei das zweite Glied (20) zwischen den seitlichen Zweigen des ersten Glieds (10) auf einer ersten Seite des mittleren Zweigs angeordnet ist.

6. Gliederanordnung nach Anspruch 5, **dadurch gekennzeichnet, dass** sie mindestens ein dem ersten Glied (10) ähnelndes drittes Glied (30) in H-Form mit zwei seitlichen Zweigen (33, 34) umfasst, wobei das dritte Glied über das zweite Glied (20), das zwischen den seitlichen Zweigen (33, 34) des dritten Glieds (30) angeordnet ist, mit dem ersten Glied (10) verbunden ist, und dass das dritte Glied fünfte (35) und sechste Drehflächen (36) aufweist, die jeweils mit siebenten (27) und achten Drehflächen (28) des zweiten Glieds (20) zusammenwirken.

7. Gliederanordnung nach einem der Ansprüche 1 bis 4, **dadurch gekennzeichnet, dass** die ersten (11) und die zweiten (12) Drehflächen an einem Arm (100) angeordnet sind, der sich von einem ersten Glied (10) vorstehend erstreckt, und dass die dritten (23) und vierten (24) Drehflächen in einem im zweiten Glied (20) ausgebildeten Hohlraum (200) angeordnet sind, innerhalb dessen der Arm gebildet ist.

8. Gliederanordnung nach Anspruch 7, **dadurch gekennzeichnet, dass** das erste Glied (10) H-förmig ist, mit zwei seitlichen Zweigen (13, 14), die durch einen mittleren Zweig (15) verbunden sind, wobei der Arm (100) zwei seitliche Zweige parallel zum mittleren Zweig verbindet, wobei das zweite Glied (20) zwischen den seitlichen Zweigen des ersten Glieds (10) angeordnet ist.

9. Anordnung nach Anspruch 7, **dadurch gekennzeichnet, dass** sich der Arm (100) freitragend vom ersten Glied (10) erstreckt.

10. Anordnung nach einem der Ansprüche 7 bis 9 und nach Anspruch 2, **dadurch gekennzeichnet, dass** die Drehflächen des Arms Formen aufweisen, die auf mindestens einen Zapfen (A, B, C, D, E) verteilt sind, der durch zwei an ihrer Basis verbundene Kegel ausgebildet ist, wobei die unteren Teile des mindestens einen Zapfens durch Schnittebenen abgestumpft sind, die sich entlang einer zur Achse der Arme parallelen Linie an einem Punkt am Umfang des Kegels schneiden, wobei der durch den Schnitt dieser Ebenen gebildete spitze Winkel im Wesentlichen 45° oder mehr beträgt.

11. Anordnung nach einem der vorangehenden Ansprüche, **dadurch gekennzeichnet, dass** sie Mittel zur Begrenzung der Drehung zwischen dem ersten und dem zweiten Glied umfasst.

12. Gliederarmband, umfassend eine Anordnung von Gliedern nach einem der vorangehenden Ansprüche.

13. Verfahren zur Herstellung einer Anordnung nach einem der Ansprüche 1 bis 11, **dadurch gekennzeichnet, dass** es die Herstellung eines Zwischenstützkeils zwischen zumindest einigen Formen und Gegenformen umfasst, wobei der Keil dazu bestimmt ist, am Ende der Herstellung gebrochen zu werden.

## Claims

1. Set of links intended to form a portion of a link bracelet or a link chain, or a link and a watch case, said elements comprising at least a first link (10) and a second link (20), said first and second links being movable with respect to one another about an axis of rotation and being produced and interlocked with one another by additive manufacturing, without other assembly means,
the first link (10) having first pivoting surfaces (11) and second pivoting surfaces (12), which are centred on said axis of rotation,
the second link (20) having third pivoting surfaces (23) and fourth pivoting surfaces (24), which are centred on said axis of rotation,
said first and third pivoting surfaces respectively forming a first form and counter-form pair which are intended to cooperate to form a first pivot, and said second and fourth pivoting surfaces respectively forming a second form and counter-form pair which are intended to cooperate to form a second pivot, said first and second pivots being centred on said axis of rotation,
**characterized in that** said first and second links (10, 20) are metallic, and
**in that** said pivoting surfaces are arranged such that said first and second form and counter-form pairs substantially eliminate the degrees of freedom between said first and second links, apart from the rotation about said axis of rotation.

2. Set of links according to Claim 1, **characterized in that** said pivoting surfaces are defined by cone generatrices, exhibiting an angle α substantially greater than or equal to a limit value of the gradient formed by the overhang of the layers of material superposed without support, during the additive manufacturing, typically substantially greater than or equal to 45°, and the axes of said cones being situated on said axis of rotation.

3. Set of links according to Claim 2, **characterized in that** the cones defining the surfaces of the first pivot face one another/are oriented in the opposite manner to the cones defining the surfaces of the second pivot.

4. Set of links according to one of the preceding claims, **characterized in that** the angles defining the cones i, with i = number of the surface, exhibit an angle αi, with α1 ≃ α3 and α2 ≃ α4.

5. Set of links according to one of the preceding claims, wherein the first link (10) is in the shape of an H with two lateral branches (13, 14) connected by a central branch (15), the second link (20) fitting between the lateral branches of the first link (10), on a first side of the central branch.

6. Set of links according to Claim 5, **characterized in that** it comprises at least one third link (30) similar to the first link (10) in the shape of an H with two lateral branches (33, 34), said third link being connected to the first link (10) via the second link (20), which fits between the lateral branches (33, 34) of the third link (30), and **in that** the third link has fifth (35) and sixth (36) pivoting surfaces that cooperate respectively with seventh (27) and eighth (38) pivoting surfaces of the second link (20).

7. Set of links according to one of Claims 1 to 4, **characterized in that** the first (11) and second (12) pivoting surfaces are arranged on an arm (100) protruding from a first link (10), and the third (23) and fourth (24) pivoting surfaces are arranged in a cavity (200) formed in the second link (20), inside which said arm fits snugly.

8. Set of links according to Claim 7, **characterized in that** said first link (10) is in the shape of an H with two lateral branches (13, 14) connected by a central branch (15), said arm (100) connecting two lateral branches, in a manner parallel to the central branch, the second link (20) fitting between the lateral branches of the first link (10).

9. Set according to Claim 7, **characterized in that** said arm (100) extends in an overhanging manner from the first link (10).

10. Set according to one of Claims 7 to 9 and according to Claim 2, **characterized in that** the pivoting surfaces of said arm have shapes distributed in at least one protuberance (A, B, C, D, E) formed by two cones connected by their bases, the lower parts of said at least one protuberance being truncated by section planes that intersect along a line parallel to the axis of the arms, at a point situated at the periphery of the cone, the acute angle formed by the intersection of these planes being substantially greater than or equal to 45°.

11. Set according to one of the preceding claims, **characterized in that** it comprises means for limiting the rotation between the first and second links.

12. Link bracelet comprising a set of links according to one of the preceding claims.

13. Method for manufacturing a set according to one of Claims 1 to 11, **characterized in that** it comprises the production of an intermediate support wedge between at least some of the forms and counter-forms, said wedge being intended to be broken at the end of manufacturing.
